# EUROPEAN PATENT SPECIFICATION

(11) **EP 1 665 600 B1**
(45) Date of publication and mention of the grant of the patent: **18.06.2008**
(21) Application number: 04782999.9
(22) Date of filing: 02.09.2004
(51) Int. Cl.: H04L 12/56, H04Q 7/38, H04J 13/00, H04B 7/216

(54) **TRANSPORT FORMAT COMBINATION LOOKUP AND RESELECTION**
TRANSPORT-FORMAT-KOMBINATIONS-NACHSCHLAGEN UND -NEUAUSWAHL
CONSULTATION ET RESELECTION DE COMBINAISONS DE FORMATS DE TRANSPORT

(30) Priority: 09.09.2003 US 501303 P; 26.11.2003 US 525293 P
(43) Date of publication of application: 07.06.2006
(73) Proprietor: INTERDIGITAL TECHNOLOGY CORPORATION, Wilmington, DE 19801 (US)
(72) Inventor: RAO, Prashanth, V., Lindenhurst, New York 11757 (US); MOVVA, Sasidhar, Wheatley Heights, NY 11798 (US)
(74) Representative: Pierrou, Mattias
(86) International application number: PCT/US2004/028613
(87) International publication number: WO 2005/027538

(56) References cited:
- US-B1- 6 341 125
- US-B1- 6 510 137
- US-B1- 6 781 970
- US-B2- 6 845 088
- "Universal Mobile Telecommunications System (UMTS); Multiplexing and channel coding (FDD) (3GPP TS 25.212 version 5.5.0 Release 5); ETSI TS 125 212" ETSI STANDARDS, EUROPEAN TELECOMMUNICATIONS STANDARDS INSTITUTE, SOPHIA-ANTIPO, FR, vol. 3-R1, no. V550, June 2003 (2003-06), XP014008374 ISSN: 0000-0001
- "Universal Mobile Telecommunications System (UMTS); Radio Resource Control (RRC) protocol specification (3GPP TS 25.331 version 5.5.0 Release 5); ETSI TS 125 331" ETSI STANDARDS, EUROPEAN TELECOMMUNICATIONS STANDARDS INSTITUTE, SOPHIA-ANTIPO, FR, vol. 3-R2, no. V550, June 2003 (2003-06), XP014008824 ISSN: 0000-0001

## Description

FIELD OF INVENTION

This invention involves transport channels of a 3GPP-like UMTS system. In particular, the invention involves transport format combination (TFC) lookup and TFC reselection mechanisms in the L1 layer ofboth the WTRU and base station sides of a UMTS.

BACKGROUND

The terms base station, wireless transmit/receive unit (WTRU) and mobile unit are used in their general sense. As used herein, a wireless transmit/receive unit (WTRU) includes, but is not limited to, a user equipment, mobile station fixed or mobile subscriber unit, pager, or any other type of device capable of operating in a wireless environment. WTRUs include personal communication devices, such as phones, video phones, and Internet ready phones that have network connections. In addition, WTRUs include portable personal computing devices, such as PDAs and notebook computers with wireless modems that have similar network capabilities. WTRUs that are portable or can otherwise change location are referred to as mobile units. When referred to hereafter, a base station is a WTRU that includes, but is not limited to, a base station, Node B, site controller, access point, or other interfacing device in a wireless environment.

Wireless telecommunication systems are well known in the art. In order to provide global connectivity for wireless systems, standards have been developed and are being implemented. One current standard in widespread use is known as Global System for Mobile Telecommunications (GSM). This is considered as a so-called Second Generation mobile radio system standard (2G) and was followed by its revision (2.5G). GPRS and EDGE are examples of 2.5G technologies that offer relatively high speed data service on top of (2G) GSM networks. Each one of these standards sought to improve upon the prior standard with additional features and enhancements. In January 1998, the European Telecommunications Standard Institute - Special Mobile Group (ETSI SMG) agreed on a radio access scheme for Third Generation Radio Systems called Universal Mobile Telecommunications Systems (UMTS). To further implement the UMTS standard, the Third Generation Partnership Project (3GPP) was formed in December 1998. 3GPP continues to work on a common third generational mobile radio standard.

As a general background, reference is made to "Universal Mobile Telecommunications System (UMTS); Multiplexing and channel coding (FDD) (3GPP TS 25.212 version 5.5.0 Release 5)", ETSI TS 125 212 (XP014008374), and to "Universal Mobile Telecommunications System (UMTS); Radio Resource Control (RRC) protocol specification (3GPP TS 25.331 version 5.5.0 Release 5)", ETSI TS 125 331 (XP014008824).

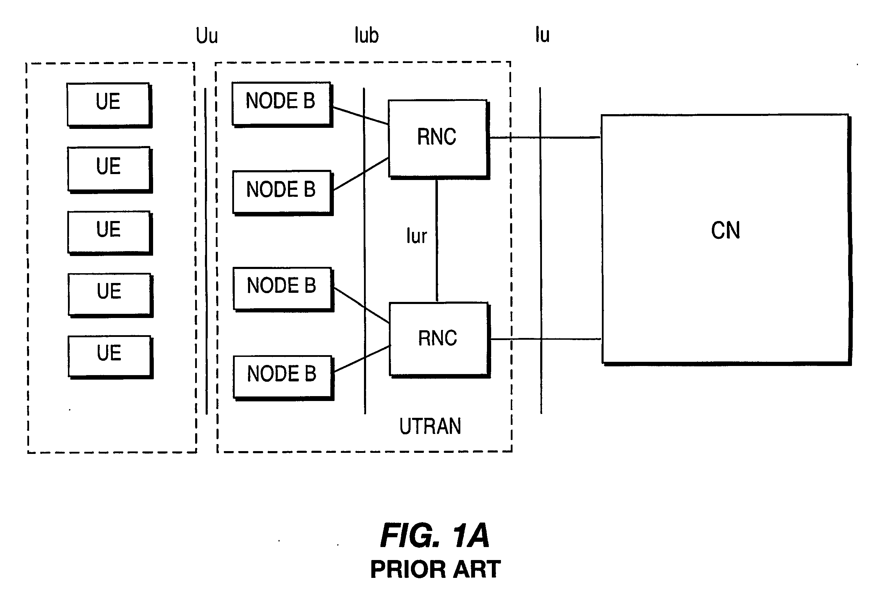

A typical UMTS system architecture in accordance with current 3GPP specifications is depicted in FIG. 1A. The UMTS network architecture includes a Core Network (CN) interconnected with a UMTS Terrestrial Radio Access Network (UTRAN) via an interface known as Iu which is defined in detail in the current publicly available 3GPP specification documents. The UTRAN is configured to provide wireless telecommunication services to users through wireless transmit receive units (WTRUs), shown as user equipments (UEs) as in 3GPP, via a radio interface known as Uu. The UTRAN has one or more radio network controllers (RNCs) and base stations, shown as Node Bs as in 3GPP, which collectively provide for the geographic coverage for wireless communications with UEs. One or more Node Bs is connected to each RNC via an interface known as Iub in 3GPP. The UTRAN may have several groups of Node Bs connected to different RNCs; two are shown in the example depicted in FIG. 1A. Where more than one RNC is provided in a UTRAN, inter-RNC communication is performed via an Iur interface.

Communications external to the network components are performed by the Node Bs on a user level via the Uu interface and the ON on a network level via various CN connections to external systems.

In general, the primary function of base stations, such as Node Bs, is to provide a radio connection between the base stations' network and the WTRUs. Typically a base station emits common channel signals allowing non-connected WTRUs to become synchronized with the base station's timing. In 3GPP, a Node B performs the physical radio connection with the UEs. The Node B receives signals over the Iub interface from the RNC that control the radio signals transmitted by the Node B over the Uu interface.

A CN is responsible for routing information to its correct destination. For example, the CN may route voice traffic from a UE that is received by the UMTS via one of the Node Bs to a public switched telephone network (PSTN) or packet data destined for the Internet.

The RNCs generally control internal functions of the UTRAN. The RNCs also provides intermediary services for communications having a local component via a Uu interface connection with a Node B and an external service component via a connection between the CN and an external system, for example overseas calls made from a cell phone in a domestic UMTS.

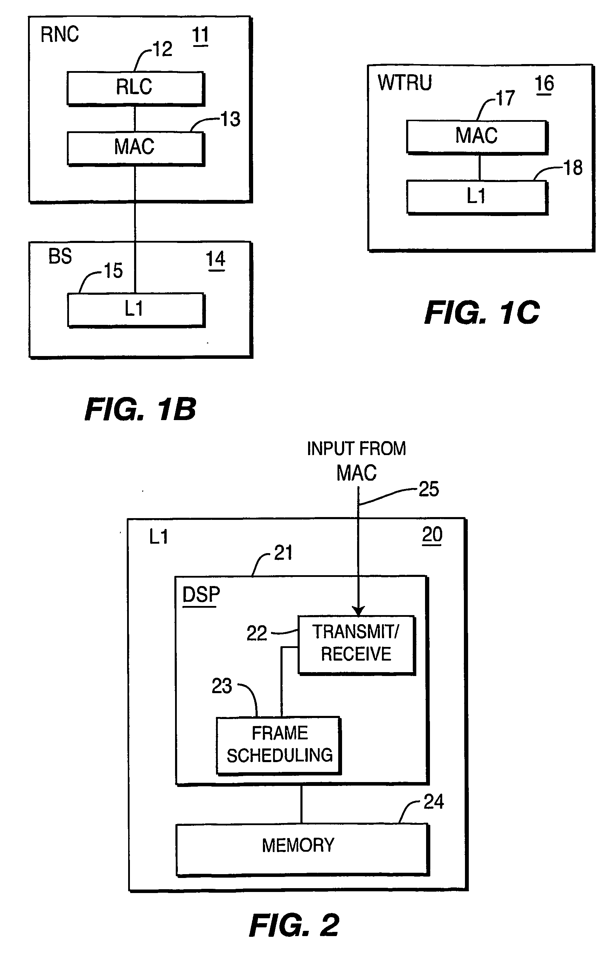

FIG. 1B shows a UTRA protocol stack, which is contained within radio network controller (RNC) 11 and base station 14. RNC 11 comprises the radio link control (RLC) layer 12 and medium access control (MAC) layer 13. Base station 14 comprises the physical L1 layer 15.

The RLC layer 12 delivers logical channels bearing control information to the MAC layer 13. These logical channels are the dynamic control channel (DCCH), which includes set-up information, and the dynamic traffic channel (DTCH), which carries user data such as voice and data.

The MAC layer 13 maps the logical channels DCCH and DTCH to different transport channels (TrCHs), which are then delivered to the L1 layer 15. The L1 layer 15 is responsible for data transmission. The interface between the MAC layer and L1 layer is formed by the transport channels TrCHs. In the L1 layer, a set of TrCHs is combined to form a coded composite transport channel (CCTrCH).

A transport format (TF) defines the data rate of a transport channel by setting the transmission time interval (TTI) (in ms), the transport block (TB) size (in bits) and the transport block set (TBS) size. A transport format combination set (TFCS) is defined for each CCTrCH. Each transport format combination (TFC) is identified by a transport format combination indicator (TFCI) and defines a transport format combination for each transport channel of the CCTrCH. The TFCI signaling only consists of pointing out the current transport format combination within the already configured TFCS. There is only one TFCI representing the current transport formats on all TrCHs of one CCTrCH simultaneously. The TFCI is used in order to inform the receiving side of the currently valid TFC, and hence how to decode, de-multiplex and deliver the received data on the appropriate transport channels. 3GPP optionally provides for "blind transport format detection" by the receiving station, in which case the receiving station considers the potential valid TFCIs. Where there is only one valid TFCI, that TFCI is used in either case.

A transport format set (TFS) is defined as the set of transport formats associated to a TrCH. The semi-static parts of all transport formats are the same within a TFS. Effectively, the transport block size and transport block set size form the instantaneous bit rate on the Transport Channel. Variable bit rate on a TrCH may, depending on the type of service, which is mapped onto the transport channel, be achieved by changing between each TTI one of the either the transport block set size only (not applicable for HS-DSCH), or both the transport block size and the transport block set size.

The transport format indicator (TFI) is a number value (e.g., between 0 and 255) assigned to describe the particular transport format used for the current TTI.

A transport block TB is the basic unit exchanged between the MAC layer 13 and physical L1 layer 15. A TBS is defined as a set of TBs, which are exchanged between the MAC layer 13 and physical L1 layer 15 at the same time instance and using the same transport channel. The TTI is defined as the inter-arrival time of TBSs, which is equal to the periodicity at which a TBS is transferred from the MAC layer 13 to L1 layer 15. For example, a 20 ms TTI represents a transmittal of data specified in the TF every 20 ms (typically amounting to two 10ms frames). The L1 layer 15 processing hardware sends the TBS to the peer entity over the radio interface, such as a WTRU.

The MAC layer 13 is responsible for selecting the TFC for combination of transport channels within the CCTrCH. This selection occurs at every TTI. For downlink, the TFC selection is based on the amount of buffered data of each logical channel. For uplink communication, the TFC selection is based both on the amount of buffered data and the UE transmission power on the uplink. The TFC defines all of the dynamic and semi-static parameters for each transport channel within the CCTrCH. The selected TFC and associated data for each UL CCTrCH is provided to the physical layer for transmission.

The interaction with the MAC layer 13 and the physical L1 layer 15 are in terms of primitives, where the primitives represent the logical exchange of information and control. One such primitive in a 3GPP-like system is a physical data request (PHY-Data-REQ), which acts as a pointer to the TBs of data sent from the MAC layer to the physical L1 layer for each transport channel. The PHY-Data-REQ primitive also includes the following parameter information pertaining to the data for the particular transport channel: the TFI, the TBS and the connection frame number (CFN) for the resident cell. The PHY-Data-REQ primitive is sent at every TTI of the particular transport channel.

For downlink base station signal processing, the TFCI selected by the MAC layer 13 is not visible over the Iub interface to the base station 14. The Iub data frames for a particular transport channel on a particular frame carries only the TFI for that transport channel on that frame. The processing algorithm of L1 layer 15 expects transport blocks (TBs) for all transport channels on a CCTrCH to be accessed with all the necessary information, such as the TFCI, TB size, number of TBs, TTI, etc. If the L1 layer 15 at base station 14 fails to receive the TFI for a particular TrCH, but is aware of a TFI value corresponding to zero bits for this transport channel, the TFI value corresponding to zero bits is assumed for that particular TrCH. When including this assumed TFI during combination of the TFIs of the different transport channels, a valid TFCI may correspond to this combination, and data shall be transmitted on the wireless interface Uu between the base station and WTRU accordingly. Although such a TFCI is a valid combination of TFIs from the available TFCIs, it does not represent the data to be transmitted if the assumption that zero bits of data were to be mapped onto the channel was actually a delayed communication between the RNC 11 and base station 14 over the Iub interface.

For a WTRU uplink signal processing, a similar problem can occur with improper TFCI selection. FIG. 1C shows a protocol layer stack for WTRU 16, comprising MAC layer 17 and physical L1 layer 18. The MAC layer 17 selects a TFCI for uplink dedicated channels (DCHs) only, and provides a valid TFCI in a physical data request PHY-Data-REQ primitive to the L1 layer 18. The TFCI is sufficient for L1 layer 18 provided all the data for a CCTrCH for a frame has reached L1 layer 18 in a timely manner. Hence, if the data has arrived early at L1 layer 18 and the TFCI provided by MAC layer 17 is verified successfully by L1 layer 18, no TFCI lookup is required to provide the necessary information to the processing algorithm of L1 layer 18 for data transfer over the radio interface. However, if all the data for a CCTrCH did not arrive from the MAC layer 17 in a timely manner, a TFCI has to be reselected with the risk of improper selection based on incomplete data transfer between MAC layer 17 and L1 layer 18.

SUMMARY

A communication data processing method is provided for deriving the combination of transport formats of multiple data channels produced by a control layer, which are processed by a physical layer into a composite channel for transmission. Sets of transmission data frames have transmission data formatted in one of a plurality of predefined formats, where the predefined formats identify a selected combination of data channels for which data is included for transmission in a data frame set of the composite channel. The method comprises receiving selectively formatted data on data channels for transmission in a composite channel data frame set from the control layer by the physical layer and determining a transmission format for the received data. The received data is compared with a known predefined channel combination format. Where data is received on all channels defined by the known predefined channel combination format, the known predefined channel combination format is identified as the transmission format. Where data is not received on all channels defined by the known predefined channel combination format, a determination is made as to whether the received data matches a different predefined channel combination format, and, if so, the different predefined channel combination format is identified as the transmission format.

BRIEF DESCRIPTION OF THE DRAWINGS

FIG. 1A shows an overview of the system architecture of a conventional UMTS network.

FIG.1B shows a UTRA protocol stack for a radio network controller and base station.

FIG. 1C shows a protocol layer stack for a WTRU.

FIG. 2 shows a block diagram for physical L1 layer elements according to the present invention.

FIG. 3 shows a timing diagram for physical data requests.

FIG. 4 shows a table of TFCI assignments.

FIGs. 5A and 5B show a flowchart method for frame processing for the WTRU.

FIGs. 6A and 6B show a flowchart method for the frame processing for the cell.

FIG. 7 shows a flowchart method for a TFCI lookup algorithm.

FIGs. 8A and 8B show a flowchart method for a TFCI reselection algorithm.

DETAILED DESCRIPTION OF THE PREFERRED EMBODIMENT(S)

Although the features and elements of the present invention are described in the preferred embodiments in particular combinations, each feature or element can be used alone (without the other features and elements of the preferred embodiments) or in various combinations with or without other features and elements of the present invention. Although the embodiments are described in conjunction with a third generation partnership program (3GPP) wideband code division multiple access (W-CDMA) system utilizing the time division duplex mode, the embodiments are applicable to any hybrid code division multiple access (CDMA)/time division multiple access (TDMA) communication system, such as time division-synchronous CDMA (TD-SCDMA). Additionally, the embodiments are applicable to CDMA systems, in general, such as the proposed frequency division duplex (FDD) mode of 3GPP W-CDMA or CDMA 2000.

FIG. 2 shows a block diagram of physical L1 layer 20, comprising a digital signal processor 21, which performs a transmit/receive process 22 and a frame scheduling process 23. Physical L1 layer 20 also comprises memory 24, preferably RAM. Transmit/receive process 22 receives input 25 from the MAC layer and performs the transport format combination lookup and reselection according to the present invention. The frame scheduling process 23 is responsible for scheduling data transport blocks on a frame by frame basis during the L1 layer processing on the DSP 21. Memory 24 is used to store several databases that maintain information pertaining to the transport format combinations (TFCs), transport format indicators (TFIs), and transport format combination indicators (TFCIs). Although shown separately in FIG. 2, memory 24 can also be included as part of digital signal processor 21 in an alternative embodiment. Table 1 lists the various databases utilized by the present invention.

**TABLE 1**

| Database ID | Content |
|---|---|
| CCTrCH | List of Available CCTrCHs And number of resident TrCHs (active TrCHs) |
| TrCH | Transport format listing TTI, transport block (TB) size, and number of TBs; Last connection frame number (CFN) at which data was received; Last transport format indicator (TFI) value received. |
| TFCS | Candidate set of transport format combinations (TFCs); each TFCS having an associated TFCI value. |
| TFS | Candidate transport format sets. |

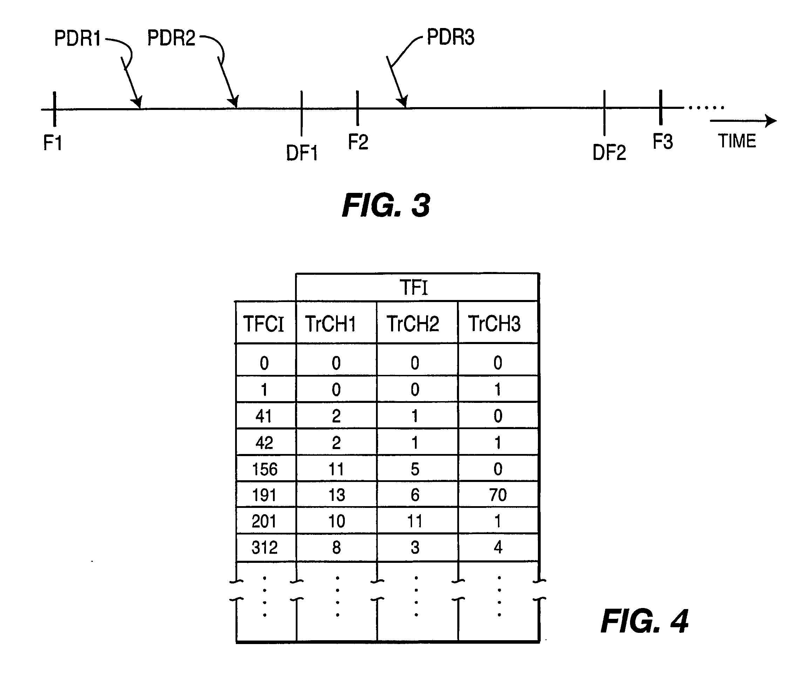

FIG. 3 shows a timeline for physical data requests (PHY-Data-REQ) PDR1, PDR2, PDR3, each associated with a respective transport channel, TrCH1, TrCH2, and TrCH3. The timeline is shown for a duration of two data frames, with frame markers F1, F2, F3. Physical L1 layer 20 receives physical data requests PDR1, PDR2, PDR3 from MAC at input 25. Delayed frame tick signals DF1, DF2 are set by the frame scheduling process 23 by setting a timer to expire at a predetermined adjustable delay from a frame tick marker, such as F1. For example, with a frame size of 10 ms, delay frame tick signal DF1 preferably occurs at 7 ms from frame mark F1. It should be noted that the 7 ms value is an empirical value and may be adjusted to suit optimum processor power implementation. When the timer expires, a delayed frame tick signal is sent to transmit/receive process 22. The delayed frame tick signal DF1 allows transmit/receive process 22 to process any received physical data requests within the frame beginning at frame marker F1. As shown in FIG. 3, physical data requests PDR1 and PDR2 are received prior to delayed frame tick signal DF1, while physical data request PDR3 is not received until after delayed frame tick signal DF1. Preferably, the processing algorithm of physical L1 layer 20 expects transport blocks (TBs) for all TrCHs on a CCTrCH to be accessed with all the necessary information, such as the TFCI, TB size, number of TBs, TTI, etc. However, in the example shown in FIG. 3, the TFI information pertaining to TrCH3 is not available to physical L1 layer 20 in a timely fashion. Although there is no data for TrCH3 for this CCTrCH, a signal is still required to send to L1 Processing indicating the current TFCI. A "dummy" signal, preferably an application programming interface (API), is constructed with a TFI indicating zero data. A TFC corresponding with the zero-data TrCH3 is selected. Should selection of a TFC according to a zero-data TrCH3 fail to occur, transmit/receive process 22 rejects the physical data requests PDR1 and PDR2 for the frame, to avoid spending resources on data transmission with an invalid TFCI that cannot be properly received over the air interface.

FIG. 4 shows a table of several TFCI values corresponding to TFI values for the combination of transport channels TrCH1, TrCH2 and TrCH3. Preferably, the value for TFI is a five bit value (i.e., 0 to 31). A TFI value of zero is representative of a defined zero-data TrCH, and a non-zero TFI value represents a particular transport format for the transport channels TrCH1, TrCH2, and TrCH3. Accordingly, the TFCI values [0, 41, 156, 201] are candidates for the physical data requests PDR1, PDR2 received in FIG. 3 for the F1-F2 frame. However, since the there are several possible TFCIs for a zero-data TrCH3, must derive the proper TFCI.

The starting point for the transmit/receive process 22 to begin calculating transport format parameters for received physical data requests is to "lookup" a TFCI for the data if all the data arrived in a timely manner for all TrCHs on a frame, or "reselect" a TFCI for the data if all the data did not arrive in a timely manner. In a 3GPP-like system, this TFCI lookup and reselection is useful for downlink dedicated channels (DCHs) and forward access channels (FACHs). Once a TFCI is looked up or reselected, the transmit/receive process 22 performs a TFCS lookup to obtain the rest of the transport format parameters.

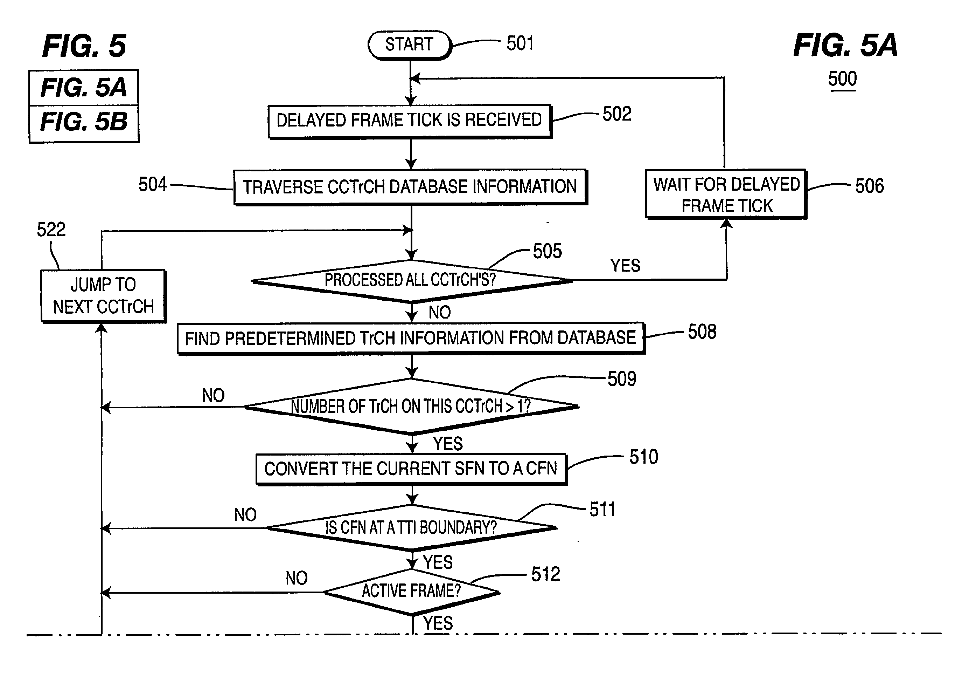

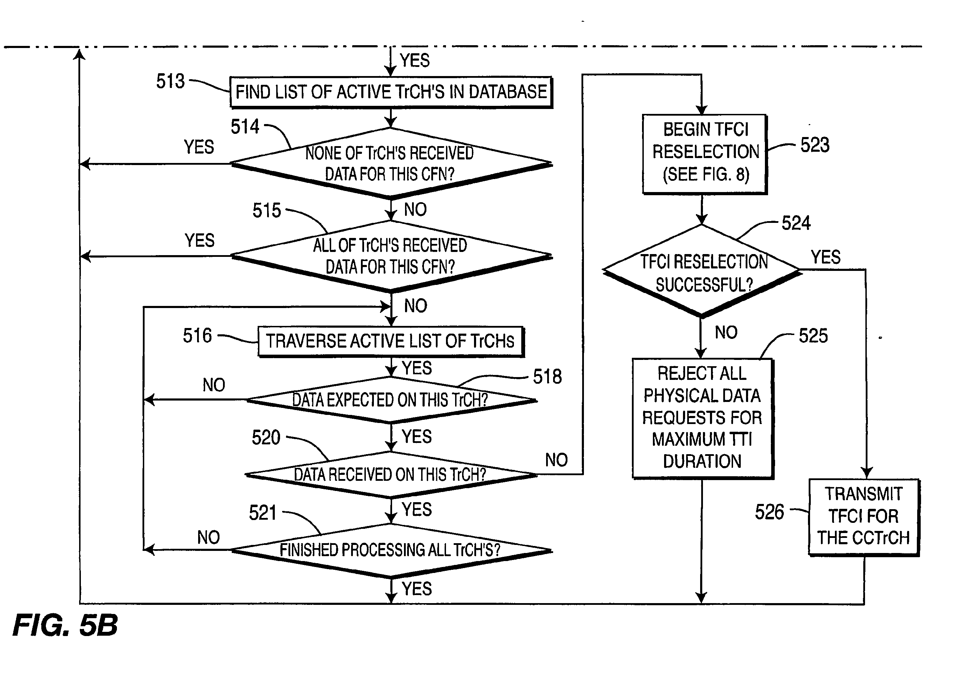

FIGs. 5A and 5B show a method flowchart for the TFCI selection algorithm performed by the transmit/receive process 22 of WTRU 16. The algorithm commences and a delayed frame tick is received in steps 501, 502. Database information for the CCTrCHs stored in memory 24 is then traversed (step 504) in preparation for the next sequence of steps performed on a CCTrCH basis. The WTRU uplink signal may have more than one CCTrCH. In step 505, transmit/receive process 22 checks to see whether all CCTrCHs for the frame have been processed. If so, transmit/receive process 22 waits for the next delayed frame tick (step 506). If all CCTrCHs have not been processed, memory 24 is searched for predetermined TrCH information from the database (step 508). Next, if there is only one TrCH on the currently processed CCTrCH, then either the TFI and data timely arrive for the single TrCH or no data arrives. If the TFI is known, the normal TFCI selection can occur. If no data arrives, then there is no data to be scheduled by frame scheduling process 23 for transmission by L1 layer 15 for the present CCTrCH and there is no need to proceed in selecting TFCI. Thus, algorithm 500 jumps to the next CCTrCH for further processing (steps 509, 522). If more than one TrCH exists on the current CCTrCH, algorithm 500 continues to step 510 where the system frame number (SFN) is converted to a connection frame number (CFN) for tracking purposes specific to the communication between the present WTRU and its peer base station. Since a TFCI assignment for the CCTrCH can occur only at a frame tick that occurs at a TTI boundary, step 511 checks for whether the current CFN is at such a TTI boundary. A TTI boundary occurs at a frame marker coinciding with the end of a transport block size span for any of the transport channels being processes for a current CCTrCH. The TFCI needs only to change at a possible transition of a TFC for the TrCHs on the CCTrCH, which occurs at TTI boundaries.

In step 512, transmit/receive process 22 checks the current frame for whether any data is being transmitted. Hence, if any physical data request occurs within this frame, it is considered an active frame and algorithm 500 continues. If not, the next CCTrCH is selected for further processing (step 522).

Next, the active TrCH database in memory 24 is examined by transmit/receive process 22 (step 513). If none of the TrCHs receive data for the CFN or all of the TrCHs receive data for this CFN, then algorithm 500 processing ends for the present CCTrCH and the processing of the next CCTrCH begins (steps 514, 515, 522). Otherwise, the database is sequentially traversed for active TrCHs, one by one, for further processing (step 516). The first TrCH is checked on a per TTI basis for whether data is expected (step 518) by looking up database field Check_TrCH_for_Expected_Data. If this database field indicates data is expected, preferably by a logical TRUE or FALSE entry, the next check in algorithm 500 is for whether data was received on this TrCH (step 520). If data is not expected, the next TrCH is processed (step 516).

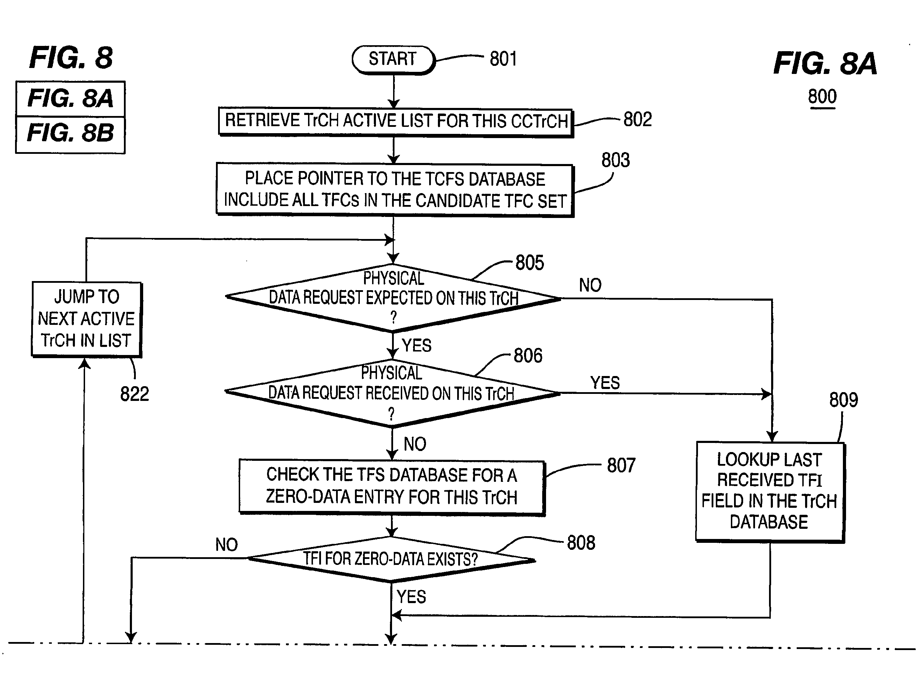

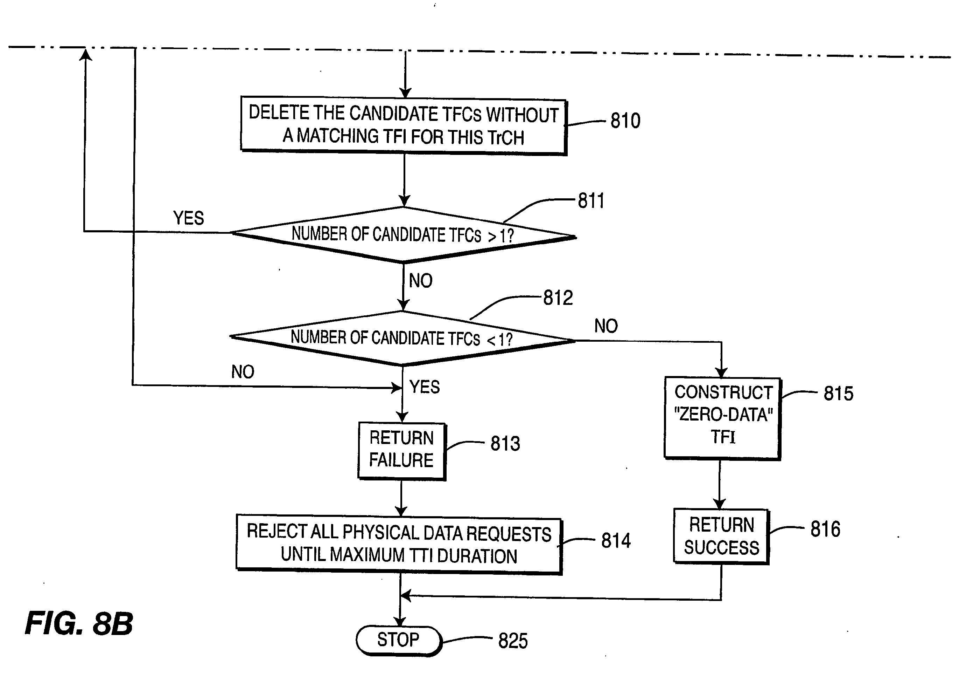

Following a positive result in step 518 for expected data, transmit/receive process 22 checks physical L1 layer database in memory 24 for a data field CFN_Last_Received (step 520), which records the last CFN in which data was received for this particular TrCH. If this field indicates a CFN that matches to the current CFN, then data was received on this TrCH during the current frame. Each TrCH is processed accordingly and upon completion of the last TrCH processing for the current CCTrCH, algorithm 500 jumps to the next CCTrCH (step 522). If at step 520 data was not received for this TrCH, then TFCI reselection begins at step 523. The process for TFCI reselection is shown in greater detail in FIGs. 8A and 8B, which will later be explained in further detail. If TFCI reselection is successful (step 524), then the TFCI for the CCTrCH is transmitted (step 526). If not, all physical data requests for the current frame must be rejected until the TTI max boundary occurs (step 525).

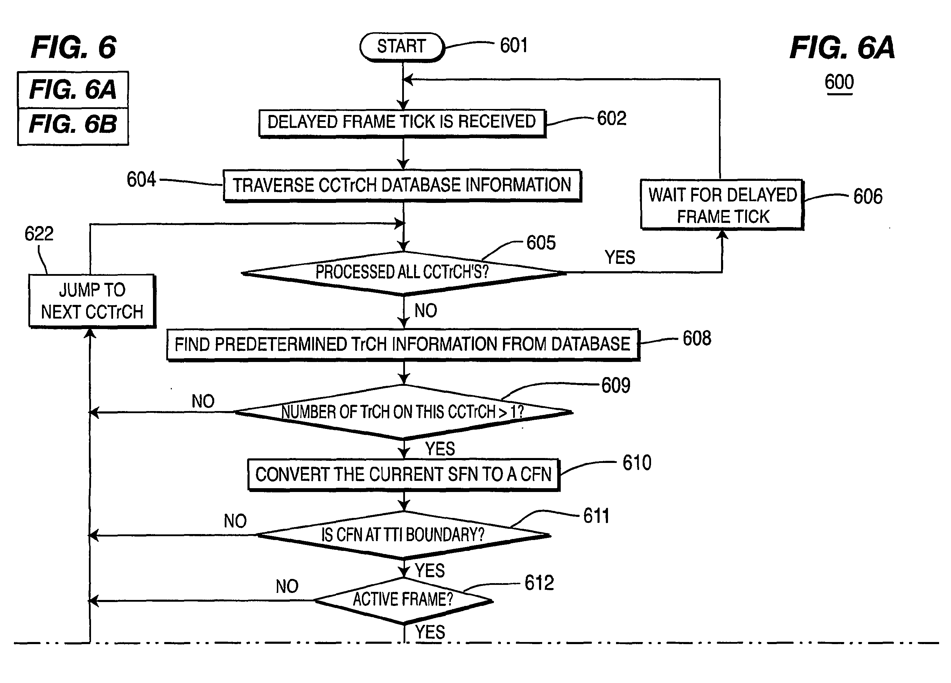

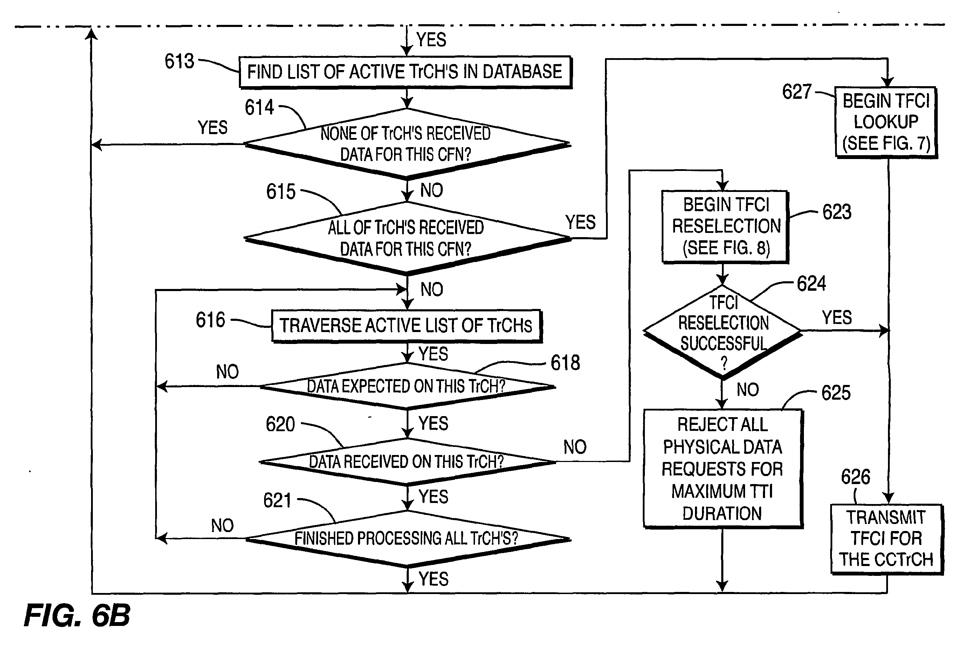

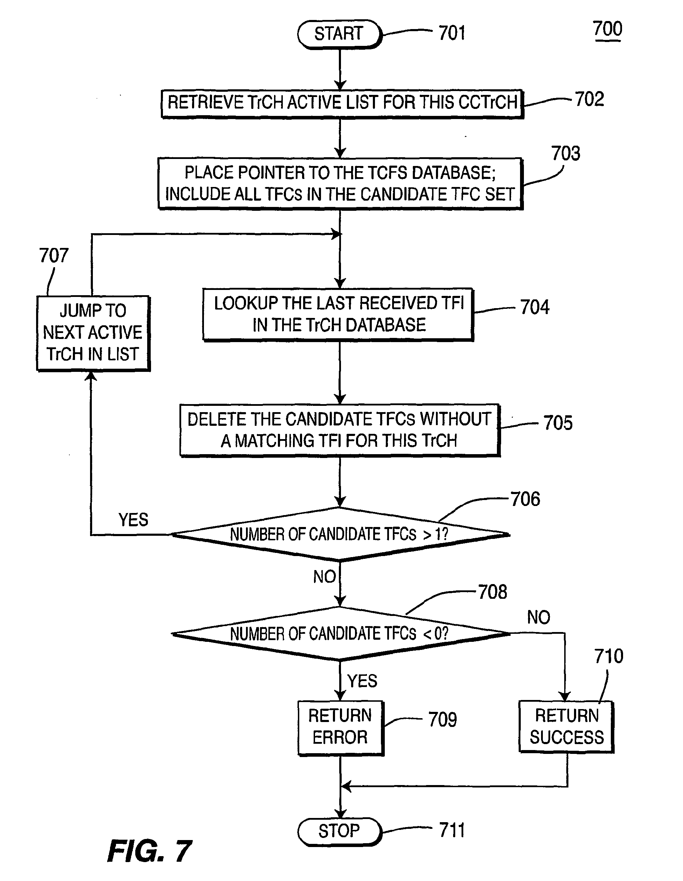

FIGs. 6A and 6B show algorithm 600 performed by the transmit/receive process 22 of the base station physical L1 layer, which performs TFCI reselection and TFCI lookup for detected zero-data TrCHs. Since steps 601 to 625 directly correspond with steps 501 to 525 of FIGs. 5A and 5B, refer to the description of steps 501 to 525 accordingly. Where FIGs. 6A and 6B deviate from FIGs. 5A and 5B is the additional TFCI lookup step 627, which is necessary because the TFCI is not sent by the MAC layer 13 to physical L1 layer 15, for base station 14. At step 615, if all the transport channels for the current CCTrCH have received data for the current CFN, then TFCI lookup can begin (step 627). The TFCI lookup process is shown on method flow chart depicted in FIG. 7, and will now be explained in further detail.

FIG. 7 shows a method flow chart for algorithm 700, which performs a TFCI lookup function following the determination that all of the active TrCHs have received data. Upon the start of algorithm 700, a list of active TrCHs for this CCTrCH is retrieved from the database in memory 24 (steps 701, 702) so that any transport channels that are not of concern can be eliminated from consideration. Next, a pointer is placed to the TCFS database in memory 24 and all TFCs are included in the candidate TFC set (step 703). From among the active TrCHs, the first TrCH is retrieved from the database in memory 24 and a field for indicating the last received TFI is looked up (step 704). Since the TFI is received with the PHY-Data_REQ every TTI, the last received TFI may have been received more than one frame ago. Any candidate TFCs without a matching TFI from step 704 for this transport channel is deleted (step 705). If there is more than one candidate TFC, then algorithm 700 jumps to the next active TrCH in the active list (step 707) retrieved in step 702. Steps 704 through 707 are repeated for all transport channels in the active list. At step 708, there can be either only one remaining TFC, or zero candidate TFCs. If there is one candidate TFC, then this TFC reflects the matching TFIs for each transport channel, an indication of success is returned to transmit/receive device 22 (step 710), and algorithm 600 assigns the TFCI associated with this candidate TFC. If there are no remaining candidate TFCs in step 708, an error indicator is returned to transmit/receive process 22 (step 709). Following steps 709 or 710, algorithm 700 ends at step 711.

FIGs. 8A and 8B show the method flow chart for reselection of the TFCI. Algorithm 800 begins and the active list of TrCHs for this CCTrCH is retrieved (steps 801, 802). Next, the pointer to the TCFS database is placed and all TFCs are included in the candidate TFC set (step 803). Algorithm 800 proceeds to process each TrCH in the active TrCH list. In step 805, a TrCH database field Check_TrCH_for_Expected_PHY_Data_REQ is looked up for the first TrCH to determine whether a physical data request is expected. If either a physical data request is not expected on this TrCH or if a physical data request is received on this TrCH, then TrCH database field TFI_Last_Rcvd is looked up, which indicates the TFI sent with the physical data request (steps 805, 806, 809). If a physical data request was expected but not received, the TFS database is checked for a TFI defined for a zero data entry for this TrCH (step 807). If there is no TFI defined for zero data on the TrCH (step 808), then a failure indication is returned to transmit/receive process 22 (step 813) and all physical data requests are rejected until the next maximum TTI boundary (step 525 of algorithm 500). If a TFI for zero data exists (step 808), then all candidate TFCs without a matching TFI for this TrCH are deleted from the candidate TFC set (steps 808, 810). At step 811, if the number of candidate TFCs is greater than 1, the next TrCH in the active list is processed according to steps 805 through 810. If only one candidate TFC remains (step 812), i.e., the number of candidate TFCs not greater than or less than one, then algorithm 800 has identified the proper TFC for the data received from the MAC layer. Since there is no data on this TrCH for this frame, a "dummy API" is constructed with TFI indicating zero data (step 815) and a successful TFCI reselection is indicated to algorithm 600 (step 816).

## Claims

1. In a wireless communication system wherein wireless communication between a transmitter and a receiver includes the transmission of at least one composite channel processed by a physical layer (20) on which a set of transport channels are multiplexed, each transport channel carrying data over timing frames in units of transport blocks produced by a control layer as physical data requests, each transport channel defined by a transport format of characteristics identified by a transport format indicator (TFI), and the composite channel defined by a transport format of characteristics identified by a transport format combination (TFC), a method to derive a valid transport format combination indicator (TFCI) for the composite channel, comprising the steps:
for each transport channel:
checking if data is expected on the transport channel;
monitoring the transport channel for received data;
identifying a respective TFC having a matching TFI for the current transport channel;
deriving the TFCI according to the respective TFCs having matching TFIs for all transport channels; and
rejecting all physical data requests corresponding to a frame where at least one transport channel has zero data and there is no TFI defined for zero data.

2. The method of claim 1 further comprising:
initializing a candidate TFC set to include all TFCs; and
deleting candidate TFCs from the candidate TFC set not having a matching TFI for the current transport channel.

3. The method of claim 1 further comprising performing all the steps for each composite channel.

4. The method of claim 3 further comprising delaying the frame timing by a predetermined delay.

5. The method of claim 1 further comprising including the derived TFCI with the transmitted data for allowing the receiver to process the received data.

6. The method of claim 1 where the transmitter is base station for a code division multiple access (CDMA) network.

7. The method of claim 1 where the transmitter is a wireless transmit/receive unit (WTRU) for a code division multiple access (CDMA) system.

8. A digital signal processor (21) used in a wireless communication system wherein wireless communication between a transmitter and a receiver includes the transmission of a composite channel processed by a physical layer (20) on which a set of transport channels are multiplexed, each transport channel carrying data over timing frames in units of transport blocks produced by a control layer as physical data requests, each transport channel defined by a transport format of characteristics identified by a transport format indicator (TFI), and the composite channel defined by a transport format of characteristics identified by a transport format combination (TFC), the system comprising databases of information, the processor (21) comprising:
a transmit/receive processor (22) configured to derive a valid transport format combination indicator (TFCI) based on expected and received data on the transport channel and candidate TFCs listed in one of said databases;
where the TFCI is derived according to a single remaining candidate TFC that matches the TFIs of the transport channels on the composite channel; and
whereby the transmit/receive processor (22) rejects all physical data requests that correspond to a frame in which at least one transport channel has zero data and there is no TFI defined for zero data.

9. A wireless transmit/receive unit (WTRU) used in a wireless communication system wherein wireless communication between a transmitter and a receiver includes the transmission of a composite channel processed by a physical layer (20) on which a set of transport channels are multiplexed, each transport channel carrying data over timing frames in units of transport blocks as physical data requests, each transport channel defined by a transport format of characteristics identified by a transport format indicator (TFI), and the composite channel defined by a transport format of characteristics identified by a transport format combination (TFC), the WTRU comprising:
a control layer for producing the physical data requests;
a physical layer (20) coupled to the control layer, comprising:
a memory (24) configured to store databases of information pertaining to parameters of the transport blocks of data; and
a digital signal processor (21) according to claim 8.

10. The VPTRU of claim 9 where the transmitter is base station for a code division multiple access (CDMA) network.

11. The WTRU of claim 9 where the transmitter is a user equipment (UE) for a code division multiple access (CDMA) system.

## Patentansprüche

1. In einem drahtlosen Kommunikationssystem, in dem eine drahtlose Kommunikation zwischen einem Sender und einem Empfänger die Übertragung von zumindest einem zusammengesetzten Kanal aufweist, der von einer physikalischen Schicht (20) verarbeitet wird und auf den ein Satz von Transportkanälen gemultiplext wird, wobei jeder Transportkanal Daten über zeitsteuerungsrahmen in Einheiten von Transportblöcken transportiert, die von einer Steuerschicht als physikalische Datenanforderungen erzeugt werden, wobei jeder Transportkanal durch ein Transportformat mit Eigenschaften definiert ist, die von einer Transportformatanzeige (TFI) identifiziert werden, und der zusammengesetzte Kanal durch ein Transportformat mit Eigenschaften definiert ist, die von einer Transportformatkombination (TFC) identifiziert werden, ein Verfahren zum Ableiten einer gültigen Transportformatkombinationsanzeige (TFCI) für den zusammengesetzten Kanal, das die folgenden Schritte aufweist:
für jeden Transportkanal:
Prüfen, ob auf dem Transportkanal Daten erwartet werden;
Überwachen des Transportkanals nach empfangenen Daten;
Identifizieren einer jeweiligen TFC mit einem passenden TFI für den aktuellen Transportkanal;
Ableiten der TFCI entsprechend den jeweiligen TFCs mit passenden TFIs für alle Transportkanäle; und
Zurückweisen aller physikalischen Datenanforderungen entsprechend einem Rahmen, in dem zumindest ein Transportkanal null Daten hat und für null Daten keine TFI definiert ist.

2. Verfahren nach Anspruch 1, das ferner aufweist:
Initialisieren eines Kandidaten-TFC-Satzes, so daß er alle TFCs enthält; und
Löschen von Kandidaten-TFCs aus dem Kandidaten-TFC-Satz, die keine passende TFI für den aktuellen Transportkanal haben.

3. Verfahren nach Anspruch 1, das ferner alle Schritte für jeden zusammengesetzten Kanal aufweist.

4. Verfahren nach Anspruch 3, das ferner das Verzögern der Rahmenzeitsteuerung um eine vorbestimmte Verzögerung aufweist.

5. Verfahren nach Anspruch 1, das ferner das Aufnehmen der abgeleiteten TFCI mit den übertragenen Daten aufweist, um dem Empfänger zu ermöglichen, die empfangenen Daten zu verarbeiten.

6. Verfahren nach Anspruch 1, wobei der Sender eine Basisstation für ein Codemultiplex-Vielfachzugriff- (CDMA-) Netzwerk ist.

7. Verfahren nach Anspruch 1, wobei der Sender eine drahtlose Sende-/Empfangseinheit (WTRU) für ein Codemultiplex-Vielfachzugriff- (CDMA-) System ist.

8. Digitaler Signalprozessor (21) der in einem drahtlosen Kommunikationssystem verwendet wird, in dem eine drahtlose Kommunikation zwischen einem Sender und einem Empfänger die Übertragung eines zusammengesetzten Kanals aufweist, der von einer physikalischen Schicht (20) verarbeitet wird und auf den ein Satz von Transportkanälen gemultiplext wird, wobei jeder Transportkanal Daten über Zeitsteuerungsrahmen in Einheiten von Transportblöcken transportiert, die von einer Steuerschicht als physikalische Datenanforderungen erzeugt werden, wobei jeder Transportkanal durch ein Transportformat mit Eigenschaften definiert ist, die von einer Transportformatanzeige (TFI) identifiziert werden, und der zusammengesetzte Kanal durch ein Transportformat mit Eigenschaften definiert ist, die von einer Transportformatkombination (TFC) identifiziert werden, wobei das System Informationsdatenbanken aufweist, wobei der Prozessor (21) aufweist:
einen Sende-/Empfangsprozessor (22), der konfiguriert ist, um basierend auf erwarteten und empfangenen Daten auf dem Transportkanal und Kandidaten-TFCs, die in einer der Datenbanken aufgelistet sind, eine gültige Transportformatkombinationsanzeige (TFCI) abzuleiten;
wobei die TFCI entsprechend einer einzigen restlichen Kandidaten-TFC abgeleitet wird, die zu den TFIs der Transportkanäle auf dem zusammengesetzten Kanal paßt; und
wobei der Sende-/Empfangsprozessor (22) alle physikalischen Datenanforderungen zurückweist, die einem Rahmen entsprechen, in dem zumindest ein Transportkanal null Daten hat und für null Daten keine TFI definiert ist.

9. Drahtlose Sende-/Empfangseinheit (WTRU), die in einem drahtlosen Kommunikationssystem verwendet wird, in dem eine drahtlose Kommunikation zwischen einem Sender und einem Empfänger die Übertragung eines zusammengesetzten Kanals aufweist, der von einer physikalischen Schicht (20) verarbeitet wird und auf den ein Satz von Transportkanälen gemultiplext wird, wobei jeder Transportkanal Daten über Zeitsteuerungsrahmen in Einheiten von Transportblöcken als physikalische Datenanforderungen transportiert, wobei jeder Transportkanal durch ein Transportformat mit Eigenschaften definiert ist, die von einer Transportformatanzeige (TFI) identifiziert werden, und der zusammengesetzte Kanal durch ein Transportformat mit Eigenschaften definiert ist, die von einer Transportformatkombination (TFC) identifiziert werden, wobei die WTRU aufweist:
eine Steuerschicht zum Erzeugen der physikalischen Datenanforderungen;
eine physikalische Schicht (20), die mit der Steuerschicht verbunden ist, die aufweist:
einen Speicher (24), der konfiguriert ist, um die Informationsdatenbanken zu speichern, die die Parameter der Transportblöcke mit Daten betreffen; und
einen digitalen Signalprozessor (21) nach Anspruch 8.

10. WTRU nach Anspruch 9, wobei der Sender eine Basisstation für ein Codemultiplex-Vielfachzugriffs- (CDMA-) Netzwerk ist.

11. WTRU nach Anspruch 9, wobei der Sender ein Benutzergerät (UE) für ein Codemultiplex-Vielfachzugriffs-(CDMA-) System ist.

## Revendications

1. Dans un système de communication sans fil dans lequel une communication sans fil entre un émetteur et un récepteur comprend la transmission d'au moins un canal composite effectuée par une couche physique (20) sur laquelle est multiplexé un ensemble de canaux de transport, chaque canal de transport transportant des données sur des trames de synchronisation dans des unités de blocs de transport produites par une couche de commande en tant que requêtes de données physiques, chaque canal de transport défini par un format de transport présentant les caractéristiques identifiées par un indicateur de format de transport (TFI), et le canal composite défini par un format de transport présentant les caractéristiques identifiées par une combinaison de format de transport (TFC), un procédé de dérivation d'un indicateur de combinaison de format de transport valide (TFCI) pour le canal composite, comprenant pour chaque canal de transport les étapes consistant à :
vérifier si les données sont attendues sur le canal de transport ;
contrôler le canal de transport pour les données reçues ; identifier une TFC respective ayant un TFI correspondant pour le canal de transport actuel ;
dériver le TFCI selon la TFC respective ayant des TFI correspondants pour tous les canaux de transport ; et
rejeter toutes les demandes de données physiques correspondant à une trame dans laquelle au moins un canal de transport n'a aucune donnée et dans laquelle il n'y a pas de TFI défini pour zéro donnée.

2. Procédé selon la revendication 1 comprenant en outre :
l'initialisation d'un ensemble de TFC candidates afin d'inclure toutes les TFC ; et
la suppression des TFC candidates de l'ensemble des TFC candidates n'ayant pas de TFI correspondant pour le canal de transport actuel.

3. Procédé selon la revendication 1 comprenant en outre l'exécution de toutes les étapes pour chaque canal composite.

4. Procédé selon la revendication 3 comprenant en outre le décalage de la synchronisation de trame par un décalage prédéterminé.

5. Procédé selon la revendication 1 comprenant en outre l'inclusion du TFCI dérivé avec les données transmises pour permettre au récepteur de traiter les données reçues.

6. Procédé selon la revendication 1 dans lequel l'émetteur est une station de base pour un réseau à accès multiple par répartition en code (CDMA).

7. Procédé selon la revendication 1 dans lequel l'émetteur est une unité émettrice/réceptrice sans fil (WTRU) pour un système à accès multiple par répartition en code (CDMA).

8. Processeur de signal numérique (21) utilisé dans un système de communication sans fil dans lequel une communication sans fil entre un émetteur et un récepteur comprend la transmission d'un canal composite effectuée par une couche physique (20) sur laquelle est multiplexé un ensemble de canaux de transport, chaque canal de transport transportant des données sur des trames de synchronisation dans des unités de blocs de transport produites par une couche de commande en tant que requêtes de données physiques, chaque canal de transport défini par un format de transport présentant les caractéristiques identifiées par un indicateur de format de transport (TFI), et le canal composite défini par un format de transport présentant les caractéristiques identifiées par une combinaison de format de transport (TFC), le système comprenant des bases de données d'informations, le processeur (21) comprenant :
un processeur émetteur/récepteur (22) configuré de manière à dériver un indicateur de combinaison de format de transport (TFCI) valide basé sur des données attendues et reçues sur le canal de transport et des TFC candidates listées dans l'une desdites bases de données ;
dans lequel le TFCI est dérivé selon une seule TFC candidate restante qui correspond aux TFI des canaux de transport sur le canal composite ; et
dans lequel le processeur émetteur/récepteur (22) rejette toutes les demandes de données physiques qui correspondent à une trame dans laquelle au moins un canal de transport n'a aucune donnée et dans laquelle il n'y a pas de TFI défini pour zéro donnée.

9. Unité émettrice/réceptrice sans fil (WTRU) utilisée dans un système de communication sans fil dans lequel une communication sans fil entre un émetteur et un récepteur comprend la transmission d'un canal composite effectuée par une couche physique (20) sur laquelle est multiplexé un ensemble de canaux de transport, chaque canal de transport transportant des données sur des trames de synchronisation dans des unités de blocs de transport en tant que requêtes de données physiques, chaque canal de transport défini par un format de transport présentant les caractéristiques identifiées par un indicateur de format de transport (TFI), et le canal composite défini par un format de transport présentant les caractéristiques identifiées par une combinaison de format de transport (TFC), la WTRU comprenant :
une couche de commande pour produire les demandes de données physiques ;
une couche physique (20) couplée à la couche de commande, comprenant :
une mémoire (24) configurée de manière à stocker les bases de données d'informations relatives aux paramètres des blocs de transport de données ; et
un processeur de signal numérique (21) selon la revendication 8.

10. WTRU selon la revendication 9 dans laquelle l'émetteur est une station de base pour un réseau à accès multiple par répartition en code (CDMA).

11. WTRU selon la revendication 9 dans laquelle l'émetteur est un équipement utilisateur (UE) pour un réseau à accès multiple par répartition en code (CDMA).
